(19) Europäisches Patentamt

European Patent Office

Office européen des brevets

(11) **EP 1 079 029 A2**

(12) **EUROPÄISCHE PATENTANMELDUNG**

(43) Veröffentlichungstag:
28.02.2001 Patentblatt 2001/09

(51) Int. Cl.⁷: **E02F 3/84**

(21) Anmeldenummer: **00118315.1**

(22) Anmeldetag: **23.08.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **25.08.1999 DE 19940404**

(71) Anmelder:
**MOBA-Mobile Automation GmbH
65604 Elz (DE)**

(72) Erfinder:
• **Sehr, Willibald
65589 Hadamar/Steinbach (DE)**
• **Prätorius, Michael
65594 Runkel an der Lahn (DE)**

(74) Vertreter:
**Schoppe, Fritz, Dipl.-Ing.
Schoppe, Zimmermann & Stöckeler
Patentanwälte
Postfach 71 08 67
81458 München (DE)**

(54) **Verfahren und Vorrichtung zum dreidimensionalen Steuern einer Baumaschine**

(57) Gemäß der vorliegenden Erfindung werden durch die Verwendung eines globalen Positionssignals und eines Höhensignals zur Bestimmung einer Position einer Baumaschine (1) die Nachteile der aus dem Stand der Technik bekannten Systeme vermieden, und es wird ein optimales Arbeiten mit vertretbarem Aufwand ermöglicht. Gemäß der vorliegenden Erfindung wird ein Verfahren und eine Vorrichtung zum Steuern von Bau- maschinen (1) geschaffen, das einen Laser (3) zur Höhenbestimmung und ein GPS-System (9a-9c) zur horizontalen Ortsbestimmung verwendet. Durch eine variable Neigungseinstellung zumindest einer Dreh- achse eines Rotationslasers (3) können digitale Gelän- demodelle abgearbeitet werden.

Fig. 1

EP 1 079 029 A2

**Beschreibung**

Die vorliegende Erfindung bezieht sich auf ein Referenzverfahren bzw. Meßverfahren und insbesondere auf ein Meßverfahren zum dreidimensionalen Steuern bzw. Nivellieren einer Baumaschine.

Im Straßen- und Tiefbau müssen, wenn eine Baumaßnahme ansteht, zunächst die bestehenden Geländeformen vermessen werden, und ein sogenanntes Geländemodell angefertigt werden. An einem Computer wird das zu entstehende Bauvorhaben geplant. Die erzeugten Daten werden daraufhin auf der Baustelle in das Gelände übertragen. Üblicherweise werden dazu Pflöcke, und im Straßenbau auch gespannte Seile an der Fahrbahnseite verwendet. Um jedoch die Wahrscheinlichkeit von möglichen Fehlern zu reduzieren, geht man in der Bauindustrie dazu über, verbesserte, automatisierte Verfahren einzusetzen. Bei diesen Verfahren werden die Ist-Positionen der Baumaschinen mit Soll-Positionen verglichen, wobei die Positionen der Baumaschinen über verschiedene Verfahren gemessen werden.

Bereits seit vielen Jahren werden Lastersteuerungen zur Regelung der Arbeitshöhe von Baumaschinen verwendet. Die Systeme eines solchen Typs verwenden einen rotierenden Laser, um einen horizontal rotierenden Laserstrahl zu erzeugen. Die so erzeugte Lichtscheibe definiert eine Sollebene für die Baumaschine. Ein an der Baumaschine montierter Empfänger erfaßt die Lichtscheibe, wobei die Arbeitshöhe der Baumaschine entsprechend der erzeugten Lichtscheibe nachgeregelt wird, falls dies notwendig ist.

Der rotierende Laser bzw. die erzeugte Lichtscheibe können bedingt geneigt werden. Da sich der Laserstrahl jedoch immer geradlinig ausbreitet, können mit diesem Verfahren nur ebene Flächen, wie z. B. Sportplätze und Parkplätze, bearbeitet werden. Zusätzlich ist bei diesen Systemen keine Regelung der Baumaschinen in einer Richtung parallel zu der Lichtebene möglich, da lediglich die Arbeitshöhe gemessen werden kann.

Bei einem anderen, bekannten Verfahren zum Steuern von Baumaschinen wird ein Ziel, das an den Baumaschinen angebracht ist, verfolgt. Über eine Optik wird das Ziel, wie z. B. eine Meßplatte oder ein Prisma, angepeilt und nachverfolgt. Servomotoren und andere elektronische Komponenten werden verwendet, um die Optik auf das zu verfolgende Ziel auszurichten. Während des Nachverfolgens der Optik werden die Himmelsrichtung, die Neigung und die Entfernung der Optik zum Objekt gemessen, wobei aus diesen Daten die Koordinaten des Zielpunkts bzw. der Baumaschine relativ zu der vorbestimmten Position der Optik berechnet werden. Die von der Totalstation berechneten Koordinaten des aktuellen Ortes der Baumaschine werden an den Rechner auf der Baumaschine gesendet. Dieser Rechner instruiert dann entsprechend der Koordinaten die Steuerungssysteme der Baumaschine. Bei Abweichungen sorgt eine entsprechende Steuerung für die richtige Positionierung der Baumaschine.

Aufgrund der vielen verwendeten Servomotoren sind diese Systeme jedoch sehr aufwendig und verursachen hohe Kosten. Ein weiteres Problem bei diesen Systemen stellt ein Verlieren des Ziels, wie z. B. durch eine Abschattung des Ziels bezüglich der Optik, dar, sowie eine Einschränkung der Arbeitsgeschwindigkeit.

In der jüngeren Vergangenheit werden mehr und mehr GPS-Systeme (GPS = globaler Positionierungssattelit) für Vermessungsaufgaben und die Positionierung von Baumaschinen verwendet. Dafür werden GPS-Empfänger an den Baumaschinen angebracht, die Signale von mehreren, an bekannten Positionen fest im Orbit verankerten Satelliten erfassen. Aus den Entfernungsmessungen zu den Satelliten werden die Absolutkoordinaten des GPS-Empfängers bzw. der Baumaschine berechnet. Durch diese Daten können wiederum die Ist-Position einer Baumaschine und die Soll-Position verglichen werden.

Bis heute ergibt sich das Problem, daß die Koordinatendaten, die aus den GPS-Signalen ermittelt werden, für die meisten Bauvorhaben keine ausreichende Genauigkeit aufweisen. Zusätzlich verringert sich die Meßgenauigkeit mit zunehmender Geschwindigkeit des GPS-Empfängers bzw. der Baumaschine. Wie bei den vorhergehenden Systemen können zudem Abschattungen auftreten, wie z. B. durch Brücken, Tunnel oder andere Geländegegebenheiten. Ein spezifisches Problem bei den GPS-Systemen besteht darin, daß die Meßgenauigkeit derselben bezüglich der Höhe der Baumaschine geringer ist als die Meßgenauigkeit in horizontaler Richtung. Bei den meisten Bauvorhaben sind jedoch die Anforderungen an die Bearbeitungsgenauigkeit bezüglich der Höhe größer als an die Bearbeitungsgenauigkeit bezüglich der horizontalen Positionierung.

Die Aufgabe der vorliegenden Erfindung besteht folglich darin, ein verbessertes Verfahren und eine verbesserte Vorrichtung zum dreidimensionalen Steuern einer Baumaschine zu schaffen, um Baumaschinen derart zu steuern, daß unebene Flächen auf einfache Art bearbeitet werden können, wobei hohe Anschaffungskosten vermieden werden.

Diese Aufgabe wird durch ein Verfahren zum dreidimensionalen Steuern einer Baumaschine gemäß Anspruch 1 und eine Vorrichtung zum dreidimensionalen Steuern einer Baumaschine gemäß Anspruch 8 gelöst.

Das Verfahren zum dreidimensionalen Steuern einer Baumaschine gemäß der vorliegenden Erfindung verwendet ein globales Positionssignal und einen Lasersender mit einem stationären Standort und weist folgende Schritte auf: Empfangen des globalen Positionssignals; Bestimmen einer Solihöhe eines Arbeitswerkzeugs der Baumaschine aus dem globalen Positionssignal; Einstellen des Lasersenders, um bezüglich dessen Standort ein die Solihöhe angebendes Höhensignal zu erzeugen; und Steuern des Arbeitswerkzeuges der Baumaschine abhängig von dem Höhensignal.

Gemäß der vorliegenden Erfindung wird ferner eine Vorrichtung zum dreidimensionalen Steuern einer Baumaschine geschaffen, die folgende Merkmale aufweist: eine erste Empfangseinrichtung, die ein globales Positionssignal empfängt; einen Lasersender mit einem stationären Standort, der ein Höhensignal erzeugt; und eine Verarbeitungseinrichtung, die aus dem empfangenen globalen Positionssignal eine Solihöhe eines Arbeitswerkzeuges der Baumaschine bestimmt und ein erstes Steuerungssignal für den Lasersender erzeugt, um den Lasersender bezüglich dessen Standort derart einzustellen, daß das durch den Lasersender erzeugte Höhensignal die Solihöhe angibt; wobei die Baumaschine das Höhensignal empfängt und das Arbeitswerkzeug abhängig von dem Höhensignal steuert.

Bei den GPS-Systemen ist die Höhenbestimmung ungenauer als die Bestimmung des Längen- bzw. Breitengrades. Bei den meisten Bauvorhaben sind aber die Anforderungen an die Meßgenauigkeiten bzw. die Grenzwerte genau umgekehrt gelagert, so daß beispielsweise typische Grenzwerte bezüglich der Höhe im Millimeterbereich liegen, während die Genauigkeit bezüglich der horizontalen Ebene im Zentimeterbereich liegt. Das System der vorliegenden Erfindung trägt diesen Anforderungen Rechnung, indem das Rotationslasersystem zur Bestimmung der Höhe der Baumaschine verwendet wird, und das GPS-System zur Bestimmung der horizontalen Koordinaten verwendet wird.

Gemäß der vorliegenden Erfindung werden durch die Verwendung eines globalen Positionssignals und eines Höhensignals zur Bestimmung einer Position einer Baumaschine die Nachteile der aus dem Stand der Technik bekannten Systeme vermieden, und es wird ein optimales Arbeiten mit vertretbarem Aufwand ermöglicht. Gemäß der vorliegenden Erfindung wird ein Verfahren und eine Vorrichtung zum Steuern von Baumaschinen geschaffen, das einen Laser zur Höhenbestimmung und ein GPS-System zur horizontalen Ortsbestimmung verwendet. Durch eine variable Neigungseinstellung zumindest einer Drehachse eines Rotationslasers können digitale Geländemodelle abgearbeitet werden.

Gemäß einem bevorzugten Ausführungsbeispiel wird als Sendeeinrichtung ein Rotationslaser mit einer Drehachse verwendet, die derart gesteuert wird, daß die durch den Rotationslaser erzeugte Lichtebene bei der ersten und zweiten Koordinate der Baumaschine eine vorbestimmte Sollhöhe aufweist, um einem Laserempfänger als Höhenreferenz zu dienen.

Gemäß dem bevorzugten Ausführungsbeispiel der Erfindung wird ferner aus dem empfangenen globalen Positionssignal, wie z. B. dem GPS-Signal, eine erste und eine zweite Koordinate der Baumaschine bezüglich zweier Achsen, wie z. B. der Längengrad und der Breitengrad der Baumaschine, bestimmt, wobei eine dritte Koordinate bzw. die Höhe der Baumaschine durch die erzeugte Lichtebene bestimmt wird.

Die Vorteile der vorliegenden Erfindung bestehen darin, daß, obwohl lediglich einfache, auf dem Markt verfügbare Systeme, wie z. B. das Rotationslasersystem und das GPS-System, verwendet werden, auch unebene Flächen bearbeitet werden können.

Da ein Laser anstatt einer Optik verwendet wird, ergibt sich ferner eine wesentlich höhere Dynamik bezüglich des Steuerns der Maschine gegenüber 3D-Systemen bzw. den im vorhergehenden erwähnten Totalstationssystemen.

Bei den im vorhergehenden beschriebenen Systemen, d. h. den Totalstationsystemen und den GPS-Systemen, wird ein Bordcomputer verwendet, der in den Baumaschinen eingebaut ist. Dies bedingt einen hohen Aufwand an Maßnahmen zum Schutz gegen Störungen (EMV) und Vibrationen. Bei dem bevorzugten Ausführungsbeispiel der vorliegenden Erfindung ist es deshalb vorgesehen, daß die durch das GPS-Signal empfangenen Koordinateninformationen mittels eines Funksignals an eine Verarbeitungseinrichtung gesendet werden, die in der Nähe des Rotationslasers plaziert ist oder in demselben integriert ist. Ein Funksender, die zweite Erfassungseinrichtung, wie z. B. ein Laserempfänger, und der GPS-Empfänger könnten in einem Paket zusammengefaßt sein, so daß die Anzahl der Komponenten und die Verdrahtung auf der Baumaschine reduziert werden.

Bevorzugte Ausführungsbeispiele der vorliegenden Erfindung werden nachfolgend bezugnehmend auf die beiliegenden Zeichnungen näher erläutert. Es zeigen:

Fig. 1 ein schematisches Diagramm, das die vorliegende Erfindung bei einem exemplarischen Bauvorhaben zeigt.

Fig. 2 ein Blockdiagramm, das die Funktionsweise der vorliegenden Erfindung darstellt.

Fig. 3 ein schematisches Diagramm, das das Einstellen eins Neigungswinkels eines Rotationslasers gemäß einem bevorzugten Ausführungsbeispiel der Erfindung zeigt.

Fig. 4 und 5 zwei Neigungsstellungen der Lichtebene, die das Einstellen eines Neigungswinkels eines Rotationslasers gemäß dem bevorzugten Ausführungsbeispiel verdeutlichen sollen.

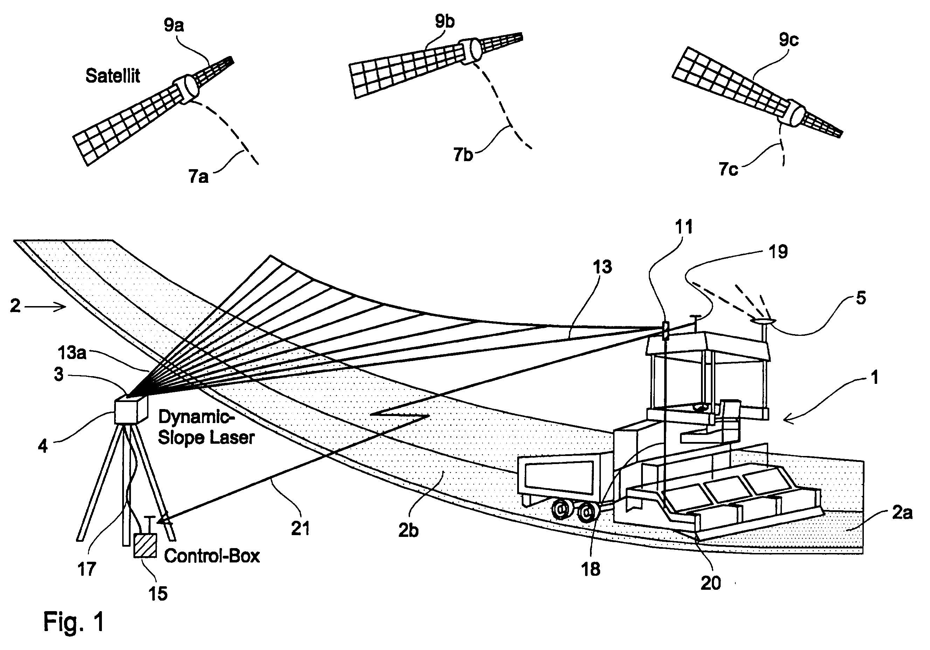

Anhand der Fig. 1 wird nachfolgend ein bevorzugtes Ausführungsbeispiel des erfindungsgemäßen Verfahrens und der erfindungsgemäßen Vorrichtung anhand eines Straßenfertigers näher erläutert.

Fig.1 zeigt einen Straßenfertiger bzw. eine Straßenteermaschine 1 beim Teeren einer Straße 2. Ein Teil der Straße 2 ist bereits geteert, der folglich eine bearbeitete Fläche 2a darstellt. Der andere Teil der Straße 2 ist noch nicht geteert und stellt folglich eine zu bearbeitende Fläche 2b dar.

Gemäß der vorliegenden Erfindung umfaßt die Vorrichtung zum dreidimensionalen Steuern des Straßenfertigers 1 einen Rotationslaser 3, der entfernt von der Baumaschine an einer vorbestimmten Position positioniert ist und eine Neigungseinrichtung 4 aufweist. Ferner ist eine erste Empfangseinrichtung 5, wie z. B. ein GPS-Empfänger, an der Baumaschine 1 vorgesehen, die Signale 7a-c dreier Satelliten 9a-c empfängt. Eine zweite Empfangseinrichtung 11, wie z. B. ein Laserempfänger, ist an der Baumaschine 1 angebracht und empfängt ein Höhensignal 13, das von dem Rotationslaser 3 erzeugt wird. Das Höhensignal 13 ist eine Lichtebene 13a, die durch den rotierenden Laserstrahl erzeugt wird. Eine Verarbeitungseinrichtung 15 ist in der Nähe des Rotationslasers 3 angeordnet und mit demselben über einen Verbinder 17, wie z. B. ein Kabel, eine Glasfaser oder dergleichen, verbunden. An der Baumaschine 1 ist ferner eine Übertragungseinrichtung 19, wie z. B. eine Funkantenne, angebracht, die die Informationen, die durch das empfangene GPS-Signal 7 erhalten werden, mittels eines Übertragungssignals 21 an eine Antenne 15a der Verarbeitungseinrichtung 15 sendet.

Gemäß dem Verfahren wird die Baumaschine 1 derart gesteuert, daß die Fläche 2a gemäß vorbestimmter Solldaten bearbeitet wird. Dabei wird eine Ist-Position der Baumaschine 1 aus dem GPS-Signal 7 und aus dem Höhensignal 13 bestimmt, wie es im folgenden noch näher beschrieben wird, wobei die Ist-Position der Baumaschine 1 mit einer Soll-Position verglichen wird, um gegebenenfalls geeignete Korrektursignale an die Baumaschine 1 auszugeben, um eine entsprechende Korrektur der Baumaschine 1 zu bewirken.

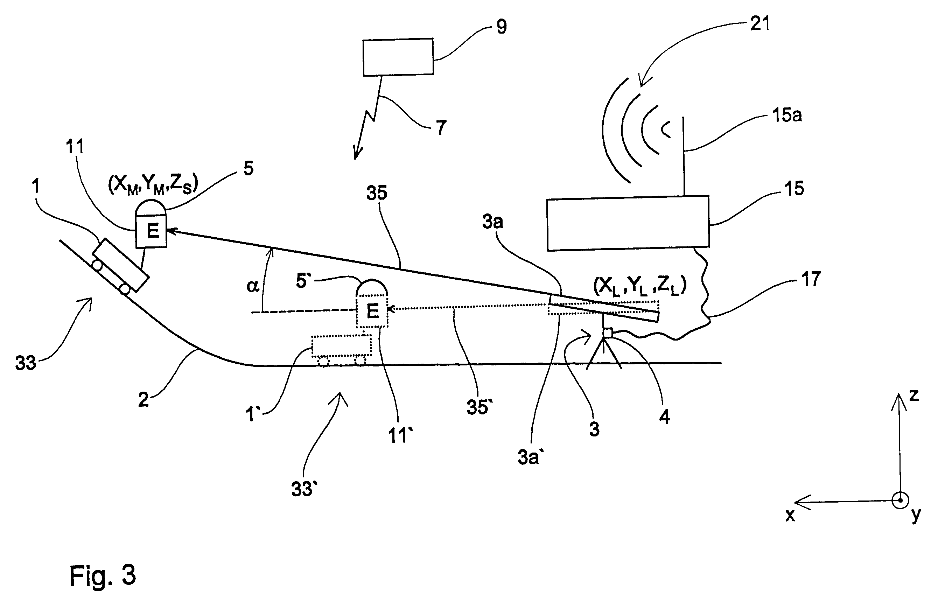

Der Rotationslaser 3 ist ein herkömmlicher rotierender Laser, der eine Drehachse aufweist, die mittels der Neigungseinrichtung 4 geneigt werden kann. Die Verarbeitungseinrichtung 15 steuert die Neigung des Rotationslasers 3 derart, daß die Lichtebene 13a an dem Laserempfänger 11 eine vorbestimmte Referenzhöhe aufweist, wie es bezüglich der Fig. 3-5 noch näher erläutert wird.

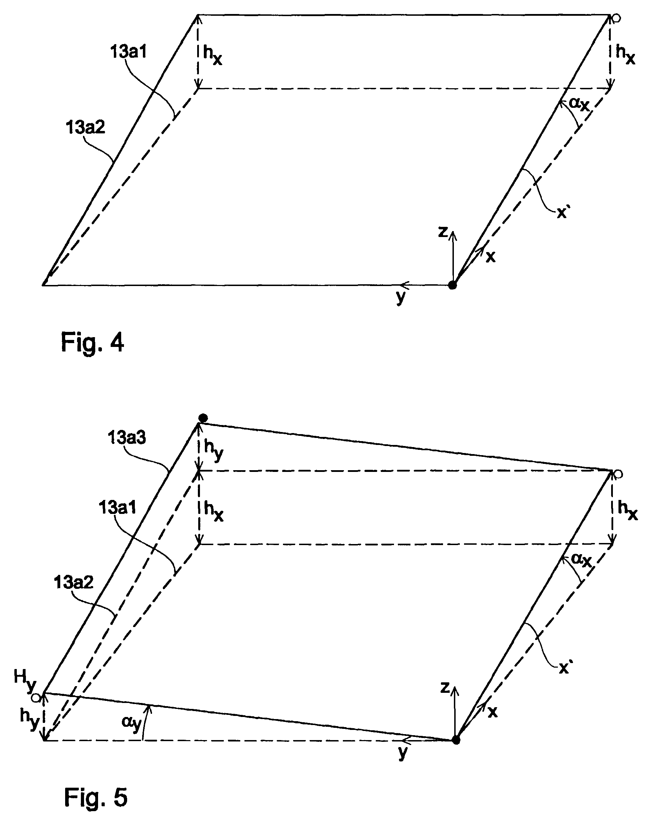

Der Laserempfänger 11 ist ein linearer Laserempfänger mit einem höhenlinearen Ausgangssignal, das heißt, daß ein Ausgangssignalpegel des Laserempfängers 11 direkt proportional zu dem bestimmten relativen Abstand zu der Referenzhöhe in vertikaler Richtung ist, so daß besonders bei Ansteuerung von Proportionalventilen (nicht gezeigt) der Baumaschine 1 ein Vorteil in der Dynamik des Steuerungssystems entsteht. Der Laserempfänger 11 ist über eine Verbindungsstange 18 an einer Teeraufbringungsvorrichtung 20 des Straßenfertigers 1 angebracht. Auf diese Weise ist der Laserempfänger 11 für das Höhensignal 13 ohne weiteres bzw. ohne Abschattungen durch andere Teile des Straßenfertigers 1 zugänglich. Durch diese Anbringung ist es ferner gewährleistet, daß sich die Höhe (z. B. der vertikale Abstand zur Meereshöhe) des Laserempfängers 11 von einer Arbeitshöhe der Teeraufbringungsvorrichtung 20 lediglich um einen konstanten Abstand unterscheidet. Es wird darauf hingewiesen, daß aus Gründen des leichteren Verständnisses dieser konstante Abstand, der in Fig. 4 im wesentlichen der Länge der Verbindungsstange 18 entspricht, vernachlässigt wird, so daß in der weiteren Beschreibung der Ort des Laserempfängers 11 dem Ort der Teeraufbringungsvorrichtung 18 bzw. der Baumaschine 1 entsprechen soll.

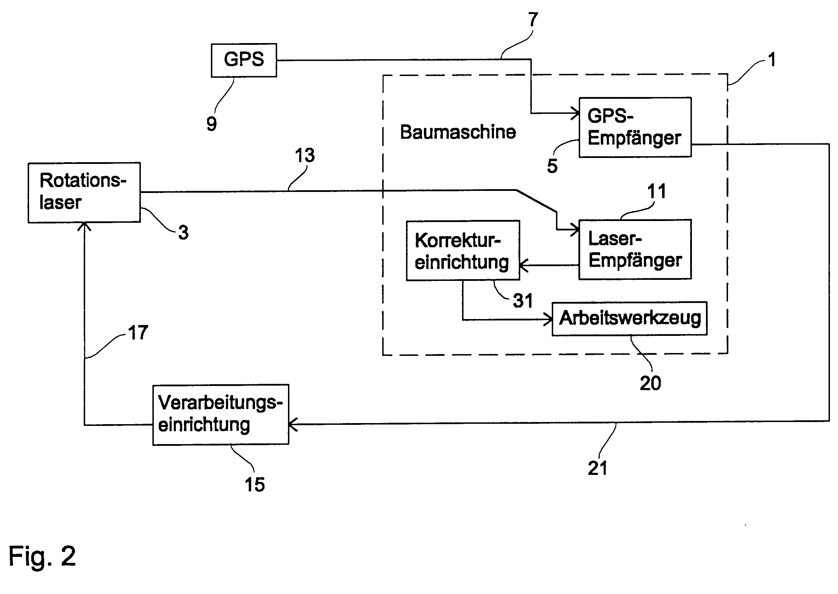

Es wird nun auf Fig. 2 Bezug genommen, die ein Blockdiagramm zeigt, das die Funktionsweise und die Signalverbindungen der vorliegenden Erfindung darstellt.

Die Verarbeitungseinrichtung 15 empfängt über die Übertragungssignale 21 Informationen von dem GPS-Empfänger 5. Der GPS-Empfänger 5 berechnet aus dem von den GPS-Sateliten 9 ausgesendeten GPS-Signal 7 zwei Koordinaten der Baumaschine 1 bezüglich zwei Achsen, die dem Längengrad bzw. dem Breitengrad entsprechen (bezüglich der Horizontalen) und sendet diese an die Verarbeitungseinrichtung 15. Die Verarbeitungseinrichtung 15 steuert gemäß dieser Koordinaten unter Zuhilfenahme der vorbestimmten absoluten Position des Rotationslasers 3 und der Solldaten die Neigung des Rotationslasers 3 derart, daß die Laserebene 13a beim Laserempfänger 11 eine Referenzhöhe aufweist, wie es im folgenden bezugnehmend auf Fig. 3-5 näher beschrieben wird. Dabei ermittelt die Verarbeitungseinrichtung 15 die Referenzhöhe der Baumaschine 1 aus den Solldaten und den GPS-Koordinaten. Der Laserempfänger 11 empfängt das Höhensignal 13 bzw. die Lichtebene 13a und sendet an eine Korrektureinrichtung 31 ein Signal, das der Abweichung der Ist-Höhe der Baumaschine 1 bzw. des Arbeitswerkzeuges 20 von der Referenzhöhe der Lichtebene 13a, die an dem Laserempfänger vorliegt, entspricht. Obwohl der Abstand zur Meereshöhe durch den GPS-Empfänger 5 bestimmt werden könnte bzw. üblicherweise bestimmt wird, wird derselbe nicht verwendet, da, wie im vorhergehenden erwähnt, die Genauigkeit dieses Meßwertes zu gering ist.

Es könnte ferner vorgesehen sein, daß der Laserempfänger 11 mittels der Übertragungseinrichtung 19 (Fig. 1) den vertikalen Abstand der Baumaschine 1 relativ zu der Referenzhöhe bzw. die Abweichung der Ist-Höhe von der Referenzhöhe an die Verarbeitungseinrichtung 15 ausgibt. Die Verarbeitungseinrichtung 15 berechnet aus diesem relativen Abstand und der Referenzhöhe die dritte Koordinate der Baumaschine 1 bezüglich einer vertikalen Achse und vergleicht die drei Koordinaten, d. h. den Längengradwert, den Breitengradwert und die Höhe, der Baumaschine 1 mit vorbestimmten Sollwerten bzw. einer Sollfläche.

Die Korrektureinrichtung 31 kann beispielsweise eine oder mehrere Signallampen aufweisen, die einem Fahrer der Baumaschine 1 eventuell vorzunehmende Kurs- bzw. Positionierungsänderungen anzeigen. Die Korrektureinrichtung 31 kann ferner mit dem Lenksystem (nicht gezeigt) der Baumaschine 1 verbunden sein, um den Kurs der Baumaschine 1 zu lenken. Bei dem vorliegenden Ausführungsbeispiel kann die Korrektureinrichtung 31 beispielsweise die Arbeitshöhe einer Teeraufbringungsvorrichtung 32 (Fig. 1) der Straßenteermaschine 1 ändern, um die Arbeitshöhe der Solihöhe anzupassen.

Anhand der Fig. 3-5 wird das Einstellen des Neigungswinkels der Drehachse des Rotationslasers 3 gemäß dem bevorzugten Ausführungsbeispiel beschrieben. Den folgenden Gleichungen ist ein rechtwinkliges, ortsfestes Koordinatensystem zugrundegelegt, wobei die x- und y-Achse beispielsweise den Längengrad bzw. Breitengrad angeben, und die z-Achse die Höhe bzw. den Abstand zur Meereshöhe angibt. Die verwendeten Koordinaten sind in einem Gauss-Krüger-Koordinatensystem festgehalten.

Fig. 3 zeigt eine vereinfachte zweidimensionale Darstellung der vorliegenden Erfindung. Am rechten, unteren Rand der Darstellung ist das zugrundegelegte rechtwinklige Koordinatensystem gezeigt, wobei die z-Achse nach oben, die x-Achse nach links und die y-Achse zum Betrachter hin gerichtet ist. Es sind zwei Positionen 33, 33' der Baumaschine 1, 1' mit dem Laserempfänger 11, 11' und dem GPS-Empfänger 5, 5' auf der Straße 2 gezeigt, wobei die Position 33' einem Anfangszustand entspricht und durch gestrichelte Linien dargestellt ist, wohingegen die augenblickliche Position 33 durch durchgezogene Linien dargestellt ist. Die Verarbeitungseinrichtung 15 ist über den Verbinder 17 mit dem Rotationslaser 3 verbunden, der die Neigungseinrichtung 4 aufweist. Ein Pfeil 35, 35' stellt den rotierenden Laserstrahl des Rotationslasers 3 dar, dessen Kopf 3a, 3a' bei jeder Position 33, 33' der Baumaschine 1, 1' auf den Laserempfänger 11, 11' gerichtet ist. Das Bezugszeichen 9 soll blockhaft die GPS-Sateliten darstellen, die das GPS-Signal 7 aussenden.

Im Ausgangszustand wird durch die Drehung des Rotationslasers 3' ein Laserstrahl 35' parallel zur Straße 2 ausgestrahlt. Der vom Rotationslaser 3 ausgesendete Laserstrahl 35, 35' dient als Höhenreferenz. Der Kopf 3a, 3a' des Rotationslasers 3 kann mittels der Neigungseinrichtung 4 auf zwei senkrecht zueinanderstehenden Achsen um die Winkel $\alpha_x$ und $\alpha_y$ verdreht werden, wodurch die räumliche Lage der kreisförmigen Laserebene verändert werden kann, derart, daß der Rotationslaser 3 jeden Punkt im Raum erreichen kann.

Der Standort $(X_L, Y_L, Z_L)$ des Rotationslasers 3 wird zu Beginn eingemessen. Die aktuellen Ortskoordinaten $(X_M, Y_M)$ einer sich bewegenden Straßenbaumaschine 1 werden vom GPS-Empfänger 3 ermittelt und über das Übertragungssignal 21 an die Verarbeitungseinrichtung 15 gesendet. In der Verarbeitungseinrichtung 15 sind die aus dem Bauplan vorgegebenen Sollhöhen $Z_S$ zur jeweiligen Sollkoordinate $X_S=X_M$ und $Y_S=Y_M$ gespeichert. Aus den damit bekannten Koordinaten $X_L, Y_L, Z_L, X_M, Y_M$ und $Z_S$ können die voneinander abhängigen Neigungswinkel $\alpha_x$ und $\alpha_y$ für die entsprechenden Neigungsachsen des Rotationslaserkopfs 3a bestimmt werden. Nach der Neigung des Rotationslaserkopfs 3a um die Winkel $\alpha_x$ und $\alpha_y$ gibt der Laser nun die Referenzhöhe $Z_S$ am entsprechenden Ort $(X_M, Y_M)$ vor.

Um mit dem Laserstrahl 35 die aus $X_M$ und $Y_M$ ermittelte Sollhöhe $Z_S$ vorzugeben, werden nacheinander die senkrecht zueinander stehenden Neigungsachsen des Rotationslasers 3 verdreht. Zuerst wird der Rotationslasers 3 mit der y-Achse als Drehachse solange um den Winkel $\alpha_x$ verdreht, bis dadurch eine Höhenänderung $h_x = Z_S - Z_L$ verursacht wird.

In Fig. 4 ist die Neigung der durch den Laserstrahl 35 aufgespannten Laserebene 13a2, die mit durchgezogenen Linien dargestellt ist, gegen die mit gestrichelten Linien dargestellte Laserebene 13a1 im Ausgangszustand gezeigt, wobei deutlich die resultierende Höhenänderung $h_x$ zu sehen ist.

Die Höhenänderung, die die Laserebene 13a aufgrund der Verdrehung um die y-Achse erfährt, berechnet sich zu:

$$h_x = \tan(\alpha_x)^* |X_M - X_L| \qquad \text{oder} \qquad \alpha_x = \arctan(h_x / |X_M - X_L|) \tag{1}$$

Falls der Winkel $\alpha_x$ lediglich bis zu einem maximal möglichen Winkel $\alpha_{x,max}$ geändert werden kann und die Höhenänderung $h_x$ mittels der Neigung um die y-Achse um den Winkel $\alpha_{x,max}$ kleiner als die erforderliche Höhenänderung $Z_S - Z_L$ ist, wird die noch bestehende Differenzhöhe $h_y = Z_S - Z_L - h_x$ durch Verdrehung der Laserebene 13a um eine zweite Achse um den Winkel $\alpha_y$ erreicht, wobei die zweite Achse aus der x-Achse durch Drehen derselben um die y-Achse um den Winkel $\alpha_x$ entsteht.

In Fig. 5 ist der Fall dargestellt, daß die Höhenänderung hx der Laserebene 13a2 von Fig. 4 nicht ausreicht, um die erforderliche Höhenänderung $Z_S - Z_L$ zu bewirken. Aus diesem Grund wird die um die y-Achse geneigte Laserebene 13a2 um die x'-Achse geneigt. Wie es in Fig. 5 ersichtlich ist, wird durch diese zweite Neigung die Differenzhöhe $h_y$ bewirkt, so daß die zweimal geneigte Laserebene 13a3 bei den Koordinaten $(X_M, Y_M)$ die Solihöhe $Z_S$ vorgibt.

Mit der Annahme, daß der Rotationslaser am Ort $(X_L, Y_L, Z_L) = (0,0,0)$ steht, gilt für die Sollhöhe:

$$Z_S = h_x + h_y \tag{2}$$

Mit dieser Annahme berechnet sich der Neigungswinkel $\alpha_y$ durch die Differenzhöhe $h_y = Z_S - h_x$ wie folgt:

$$\alpha_y = \arctan(h_y/|Y_M\text{-}Y_L|) = \arctan((Z_S - h_x) / |Y_M\text{-}Y_L|) \tag{3}$$
$$= \arctan((Z_S\text{-}\tan(\alpha_x)^*|X_M\text{-}X_L|)/|Y_M\text{-}Y_L|)$$

Nach $h_y$ aufgelöst ergibt diese Gleichung

$$h_y = |Y_M\text{-}Y_L|^*\tan(\alpha_y) \tag{4}$$

Durch Neigung des Rotationslaserkopfs 3 kann auf diese Weise dem Laserempfänger 11 somit die Referenzhöhe $Z_S$ vorgegeben werden, so daß der Laserempfänger 11 den Abstand zwischen der Arbeitshöhe der Teeraufbringungsvorrichtung 20 und der Sollposition bestimmen kann.

Es wird darauf hingewiesen, daß bei den im vorhergehenden erwähnten Gleichungen (1) - (4) die aufeinander senkrecht stehenden Drehachsen des Lasersenders $Y_L$ und $X_L$ sind, und daß dieselben nur für den Fall gültig sind, daß $Y_L$ und $X_L$ parallel zu und in Richtung der Gauß-Krüger-Koordinaten Y (Rechtswert) bzw. X (Hochwert) zeigen.

Bezugnehmend auf Gleichung (2) wird auf folgendes hingewiesen: liegt die Koordinate des Laserempfängers auf der Neigungsachse $Y_L$, so muß der vom Rotationslaser 3 erzeugte Laserstrahl durch Neigung um die Neigungsachse $X_L$ um den Winkel $\alpha_x$ auf den Laserempfänger 11 gerichtet werden. Ist diese Einstellung mechanisch nicht möglich, da der notwendige Neigungswinkel $\alpha_x$ den maximalen Winkel $\alpha_{x,max}$ überschreitet, so muß die Neigungsachse um mindestens 90° verdrehbar sein. Analoges gilt für den Fall, wenn die y-Koordinate des Empfängers auf der Neigungsachse $X_L$ liegt. Ferner kann der Fall, daß $(X_L, Y_L, Z_L) = (0,0,0)$ nicht gilt, als konstanter Offset betrachtet und leicht auf die obigen Gleichungen (2) - (4) übertragen werden.

Obwohl die erste Empfangseinrichtung 5 bei dem bevorzugten Ausführungsbeispiel als ein GPS-Empfänger dargestellt ist, kann die erste Empfangseinrichtung 5 ferner zusätzliche Einrichtungen zum Verbessern der Meßgenauigkeit aufweisen, um das GPS-Signal auch bei einer Abschattung simulieren zu können.

Der GPS-Empfänger 5 und der Laserempfänger 11 sowie die Korrektueinrichtung 31 und/oder die Übertragungseinrichtung 19 können in einem Paket integriert sein, so daß die Anzahl der Komponenten in der Baumaschine 1 verringert wird. Entsprechend kann die Verarbeitungseinrichtung 15 mit dem Rotationslaser 3 einstückig sein, so daß die Anzahl der notwendigen Komponenten zusätzlich reduziert wird.

Bei einem weiteren Ausführungsbeispiel der vorliegenden Erfindung wird zum Erzeugen des Höhensignals ein Laser mit einer Dreheinrichtung und einer Neigungseinrichtung verwendet, wobei keine Laserebene aufgespannt wird, sondern ein Laserstrahl immer auf den Laserempfänger und die Solihöhe gerichtet ist. In diesem Fall werden aus der bestimmten absoluten horizontalen Position $X_M$, $Y_M$ der Baumaschine 1, der vorbestimmten absoluten Position $(X_L, Y_L, Z_L)$ der Lasers und der Referenzhöhe $ZS(X_M, Y_M)$ ein Drehwinkel für die Dreheinrichtung und ein Neigungswinkel für die Neigungseinrichtung berechnet.

Der Laserempfänger kann ebenfalls ein gewöhnliches mehrkanaliges Laserarray oder eine andere geeignete Einrichtung zum Empfangen des Höhensignals sein.

Die Verarbeitungseinrichtung kann beispielsweise ein Personalcomputer sein, der einen Speicher aufweist, in dem die Sollwerte des Bauvorhabens (Geländeform) gespeichert sind.

## Patentansprüche

1. Verfahren zum dreidimensionalen Steuern einer Baumaschine (1) unter Verwendung eines globalen Positionssignals (7) und eines Lasersenders (3) mit einem stationären Standort $(X_L, Y_L, Z_L)$, mit folgenden Schritten:

   Empfangen (41) des globalen Positionssignals (7) und daraus Ermittlung einer aktuellen ersten und zweiten Ortskoordinate $(X_M, Y_M)$ der sich bewegenden Baumaschine;

   Zuordnung einer Sollhöhe (ZS) eines Arbeitswerkzeugs (20) der Baumaschine (1) zu der aus dem globalen Positionssignal (7) ermittelten ersten und zweiten Ortskoordinate $(X_M, Y_M)$;

   Einstellen des Lasersenders (3), um bezüglich dessen Standort ein die Sollhöhe $(Z_S)$ angebendes Höhensignal (13) zu erzeugen; und

   Steuern des Arbeitswerkzeuges (20) der Baumaschine (1) abhängig von dem Höhensignal (13).

2. Verfahren gemäß Anspruch 1, bei dem das Bestimmen der Sollhöhe $(Z_S)$ der Baumaschine (1) folgende Schritte aufweist:

Bestimmen der ersten und zweiten Koordinate ($X_M$, $Y_M$) der Baumaschine (1) bezüglich zweier Achsen, die einem Längengrad bzw. einem Breitengrad der Baumaschine (1) entsprechen, aus dem empfangenen globalen Positionssignal (7); und

Zuordnung der Sollhöhe ($Z_S$) des Arbeitswerkzeuges (20) abhängig von der ersten und zweiten Koordinate ($X_M$, $Y_M$).

3. Verfahren gemäß Anspruch 2, bei dem für vorbestimmte erste und zweite Koordinaten ($X_S$, $Y_S$) von einer zu bearbeitenden Geländeform vorbestimmte Solihöhen ($Z_S$) gespeichert sind, wobei die Solihöhe ($Z_S$) abhängig von der ersten und zweiten Koordinate ($X_S$, $Y_S$) ausgelesen wird.

4. Verfahren gemäß einem der Ansprüche 1 bis 3, bei dem der Schritt des Einstellens des Höhensignals (13) des Lasersenders (3) folgende Schritte aufweist:

Bestimmen einer Höhendifferenz ($Z_S$-$Z_L$) zwischen der Solihöhe ($Z_S$) und der Höhenposition ($Z_L$) am stationären Standort des Lasersenders (3);

in einer ersten Richtung, Bestimmen des Abstands ($X_M$-$X_L$) zwischen der Baumaschine (1) und dem stationären Standort ($X_L$, $Y_L$, $Z_L$) des Lasersenders (3);

Bestimmen eines ersten Neigungswinkels ($\alpha_x$) aus der Höhendifferenz ($Z_S$-$Z_L$) und dem Abstand ($X_M$-$X_L$);

Neigen des Lasersenders (3) um eine erste Neigungsachse um den ersten Neigungswinkel ($\alpha_x$).

5. Verfahren gemäß Anspruch 4, bei dem das Neigen des Lasersenders (3) bis zu einem maximalen ersten Neigungswinkel ($\alpha_{x,max}$), dem eine erste Teilhöhe ($h_x$) entspricht, durchgeführt wird, falls der berechnete erste Neigungswinkel ($\alpha_x$) den maximalen Neigungswinkel ($\alpha_{x,max}$) übersteigt, wobei daraufhin folgende Schritte durchgeführt werden:

in einer zweiten Richtung, Bestimmen des Abstands ($Y_M$-$Y_L$) zwischen der Baumaschine (1) und dem stationären Standort ($X_L$, $Y_L$, $Z_L$) des Lasersenders (3);

Bestimmen einer zweiten Teilhöhe ($h_y$) aus der Differenz zwischen der Höhendifferenz ($Z_S$-$Z_L$) und der ersten Teilhöhe ($h_x$);

Bestimmen eines zweiten Neigungswinkels ($\alpha_y$) aus der zweiten Teilhöhe und dem Abstand ($Y_M$-$Y_L$) entlang der zweiten Richtung; und

Neigen des Lasersenders (3) um eine zweite Neigungsachse um den zweiten Neigungswinkel ($\alpha_y$).

6. Verfahren gemäß einem der vorhergehenden Ansprüche, bei dem der Schritt des Empfangens des globalen Positionssignals (7) das Empfangen eines GPS-Signals als globales Positionssignal aufweist.

7. Verfahren gemäß einem der vorhergehenden Ansprüche, bei dem der Schritt des Steuerns folgende Schritte aufweist:

Bestimmen einer Abweichung einer Position des Arbeitswerkzeugs (20) der Baumaschine (1) von einer Sollposition ($Z_S$) abhängig von dem Höhensignal (13); und

Vergleichen der Position des Arbeitswerkzeugs (20) der Baumaschine (1) mit dem empfangenen Höhensignal (13); und

falls eine Abweichung vorliegt, Steuern des Arbeitswerkzeuges (20) der Baumaschine (1), um die Abweichung von der vorbestimmten Sollposition ($Z_S$) zu kompensieren.

8. Vorrichtung zum dreidimensionalen Steuern einer Baumaschine (1), mit

einer an der Baumaschine (1) angeordneten ersten Empfangseinrichtung (5), die ein globales Positionssignal (7) empfängt;

einem Lasersender (3) mit einem stationären Standort $(X_L, Y_L, Z_L)$, der ein Höhensignal (13) erzeugt; und

einer Verarbeitungseinrichtung (15), die aus dem empfangenen globalen Positionssignal (7) die erste und zweite Ortskoordinate $(X_M, Y_M)$ erhält, diese der Sollhöhe (ZS) eines Arbeitswerkzeuges (20) der Baumaschine (1) zuordnet und ein erstes Steuerungssignal für den Lasersender (3) erzeugt, um den Lasersender (3) bezüglich dessen Standort $(X_L, Y_L, Z_L)$ derart einzustellen, daß das durch den Lasersender (3) erzeugte Höhensignal (13) die Solihöhe $(Z_S)$ angibt;

wobei die Baumaschine (1) das Höhensignal (13) empfängt und das Arbeitswerkzeug (20) abhängig von dem Höhensignal (13) steuert.

9. Vorrichtung gemäß Anspruch 8, bei der

die erste Empfangseinrichtung (5) aus dem globalen Positionssignal die zwei Koordinaten $(X_M, Y_M)$ der Baumaschine (1) bezüglich einer ersten und einer zweiten Achse bestimmt, wobei die erste Achse einem Längengrad und die zweite Achse einem Breitengrad der Position der Baumaschine (1) entsprechen; und

die Verarbeitungseinrichtung (15) den zwei Koordinaten $(X_M, Y_M)$ die Solihöhe $(Z_S)$ des Arbeitswerkzeuges (20) zuordnet.

10. Vorrichtung gemäß Anspruch 9, bei der die Verarbeitungseinrichtung (15) gespeicherte Sollhöhen $(Z_S)$ für vorbestimmte erste und zweite Koordinaten $(X_S, Y_S)$ von einer zu bearbeitenden Geländeform aufweist, auf die abhängig von den vorbestimmten ersten und zweiten Koordinaten $(X_S, Y_S)$ zugegriffen wird.

11. Vorrichtung gemäß einem der Ansprüche 8 bis 10, bei der der Lasersender (3) zum Erzeugen des Höhensignals (13) einen Laserstrahl (35) emittiert und folgende Merkmale aufweist:

eine Dreheinrichtung mit einer Drehachse, die den Lasersender (3) dreht, um durch den Laserstrahl (35) eine Lichtebene (13a) als Höhensignal (13) zu erzeugen; und

eine Neigungseinrichtung (4), die die Drehachse um eine erste Neigungsachse um einen ersten Neigungswinkel $(\alpha_x)$ neigt, den dieselbe von der Verarbeitungseinrichtung (15) empfängt;
wobei die Verarbeitungseinrichtung (15) den ersten Neigungswinkel $(\alpha_x)$ aus einer Höhendifferenz $(Z_S-Z_L)$ zwischen der Solihöhe $(Z_S)$ und der Höhenposition $(Z_L)$ am stationären Standort des Lasersenders (3) und einem Abstand $(X_M-X_L)$ zwischen der Baumaschine (1) und dem stationären Standort $(X_L, Y_L, Z_L)$ des Lasersenders (3) entlang einer ersten Richtung bestimmt;

12. Vorrichtung gemäß Anspruch 11, bei der die Neigungseinrichtung (4) um die erste Neigungsachse lediglich bis zu einem maximalen ersten Neigungswinkel $(\alpha_{x,max})$, dem eine erste Teilhöhe $(h_x)$ entspricht, neigbar ist, und sich dieselbe ferner um eine zweite Neigungsachse um einen zweiten Neigungswinkel $(\alpha_y)$ neigt, den dieselbe von der Verarbeitungseinrichtung (15) empfängt, falls der berechnete erste Neigungswinkel $(\alpha_x)$ den maximalen Neigungswinkel $(\alpha_{x,max})$ übersteigt, wobei die Verarbeitungseinrichtung (15) den zweiten Neigungswinkel $(\alpha_y)$ aus einer zweiten Teilhöhe, die durch die Differenz der Höhendifferenz $(Z_S-Z_L)$ und der ersten Teilhöhe $(h_x)$ bestimmt ist, und dem Abstand $(Y_M-Y_L)$ zwischen der Baumaschine (1) und dem stationären Standort $(X_L, Y_L, Z_L)$ des Lasersenders (3) entlang einer zweiten Richtung bestimmt.

13. Vorrichtung gemäß einem der Ansprüche 8 bis 12, bei der die erste Empfangseinrichtung (5) ein GPS-Empfänger und das globale Positionssignal (7) ein GPS-Signal ist.

14. Vorrichtung gemäß einem der Ansprüche 8 bis 13, bei der die zweite Empfangseinrichtung (11) ein mehrkanaliges Laserarray ist.

15. Vorrichtung gemäß einem der Ansprüche 8 bis 14, bei der die zweite Empfangseinrichtung (11) die Abweichung einer Position des Arbeitswerkzeugs (20) der Baumaschine (1) von einer Sollposition $(Z_S)$ bestimmt;
wobei die Empfangseinrichtung (11) ein Signal, das der Abweichung entspricht, an eine Korrektureinrichtung (31) sendet, die das Arbeitswerkzeug (20) der Baumaschine (1) steuert, um die Abweichung von der vorbestimmten Sollposition $(Z_S)$ zu kompensieren.

16. Vorrichtung gemäß einem der Ansprüche 8 bis 15, die ferner eine Übertragungseinrichtung (19) aufweist, die Informationen bezüglich des globalen Positionsignals (7) an die Verarbeitungseinrichtung (15) sendet.

17. Vorrichtung gemäß Anspruch 16, bei der die erste Empfangseinrichtung (5), die Übertragungseinrichtung (19) und die zweite Empfangseinrichtung (11) einstückig sind.

18. Vorrichtung gemäß einem der Ansprüche 8 bis 17, bei der die Verarbeitungseinrichtung (15) ein Computer ist, der entfernt von der Baumaschine (1) angeordnet ist.

19. Vorrichtung gemäß einem der Ansprüche 8 bis 18, bei der die Verarbeitungseinrichtung (15) in die Sendeeinrichtung (3) integriert ist.

EP 1 079 029 A2

Fig. 1

Fig. 2

Fig. 3

EP 1 079 029 A2

Fig. 4

Fig. 5